# EUROPEAN PATENT SPECIFICATION

(11) **EP 3 263 893 B1**
(45) Date of publication and mention of the grant of the patent: **28.10.2020**
(21) Application number: 17178176.8
(22) Date of filing: 27.06.2017
(51) Int. Cl.: F03D 80/40

(54) **A WIND TURBINE ROTOR BLADE COMPRISING AN ELECTRIC HEATING SYSTEM**
WINDTURBINENROTORSCHAUFEL MIT ELEKTRISCHEM HEIZSYSTEM
PALE DE ROTOR DE TURBINE ÉOLIENNE COMPRENANT UN SYSTÈME DE CHAUFFAGE ÉLECTRIQUE

(30) Priority: 28.06.2016 SE 1650927
(43) Date of publication of application: 03.01.2018
(73) Proprietor: Nilsson, Greger, 945 91 Norrfjärden (SE)
(72) Inventor: Nilsson, Greger, 945 91 Norrfjärden (SE)
(74) Representative: Zacco Sweden AB

(56) References cited:
- EP-A1- 2 754 891
- WO-A1-2011/127995
- WO-A1-2011/127997
- US-A1- 2005 189 345
- US-A1- 2016 163 415

## Description

### Technical field of the invention

The present invention relates to a wind turbine rotor blade comprising a blade body and an electric heating system. The blade body comprises a support surface that is in contact with the heating system. The rotor blade can be heated by the heating system. The heating system is of the type comprising a heating layer comprising an electrically conducting element, a first electric conductor that is electrically connected to the heating layer at a first connection side and a second electric conductor that is electrically connected to the heating layer at a second connection side. The first and second electric conductors are connected to an electric power source such that an electric current can be directed through the heating layer between the first connection side and the second connection side of the heating layer.

### Background

Rotor blades on wind turbines are exposed to the weather conditions all year around. They are exposed to heat, cold, hard winds, rain, hail, snow and sometimes also to lightning, all of which causes degradation of the material and mechanical wear. Moreover, they are also exposed to mechanical wear from e.g. collisions with birds or other objects that may occasionally be carried by the wind.

In wintertime, the wind turbine blades are subject to ice crust formation, due to high humidity, snow and low temperatures. In order to maintain wind turbine efficiency and ensure production also during winter conditions, the blades are often provided with blade heat systems. Usually, the blade heat systems are based either on hot air circulation within the blade, or based on heating the blade surfaces directly.

In the direct heat systems, the heat is generally generated by directing electric current through carbon fibre mats with low electric conductivity, which are applied on the exposed areas of the blade. Such mats are usually made from carbon fibre composite material. The direct heating method is the predominantly used method for glass fibre composite blades and is more energy effective than circulating air, since direct heating can be limited to areas subjected to ice crust build-up. The heating mats are therefore primarily applied on or near the leading edge on the most remote half of the blade. The heating mat is then covered by a protective glass fibre fabric layer. Unfortunately, this is also an area that is exposed to collisions and lightning strikes, which both may damage the direct heating systems. The exposure to lightning strikes is unfortunately also enhanced by the carbon fibre mats acting as unintentional lightning rods. Thus it happens that the protective glass fibre layer is damaged to such a degree that the underlying carbon fibre mat is exposed and also subjected to damage.

When the carbon fibre mats have been damaged, the electric conductivity is at least locally reduced in the damaged area, and it can even be totally interrupted. The electric current will then be forced to take another route around the damaged area. As a result, there will be a higher concentration of electric current in close vicinity of the damaged area. Due to the electric current thus being concentrated in a smaller area, this will generate a hotspot with a high temperature in this smaller area. At the same time a cold spot will occur in areas where the electric current has been interrupted or reduced. By cold spot is meant an area which is not heated to the temperature to which it is normally heated by the heating system. Instead the temperature is lower. Since wind turbine rotor blades are usually made of composite materials comprising e.g. epoxy, high temperatures can in themselves be dangerous. At these hotspots, laminate temperatures may exceed the matrix/epoxy degradation temperature, which is potentially dangerous since the subsequent operation of the heat system may aggravate the damage, and eventually leading to catastrophic failure of the rotor blade. At the cold spots other problems arise such as the development of ice crusts.

Similar problems also occur in for example air plane wings, which are also made of a composite material and in which an electric heating system is sometimes used in order to avoid or to get rid of ice crust formations on the wing that can build up due to the weather conditions.

Electric heating systems are also used in other applications in order to prevent icing or achieve thawing of ice. An example of an electric heating system with an electric heating layer or layers is given in US200518934.

### Summary of the invention

It is an object of the present invention to provide an improved electric heating system for a wind turbine rotor blade, which system is capable of reducing the negative effects related to some of the problems regarding hotspots and cold spots that occur as a result of damage.

Accordingly is defined a wind turbine rotor blade comprising a blade body and an electric heating system, wherein said blade body comprises a support surface that is in contact with the heating system, wherein the heating system comprises
- a first heating layer comprising an electrically conducting element, resulting in the first heating layer being electrically conductive,
- a first electric conductor that is electrically connected to the first heating layer at a first connection side of the first heating layer,
- a second electric conductor that is electrically connected to the first heating layer at a second connection side of the first heating layer,
- wherein the first and second electric conductor are being connected to an electric power source such that an electric current can be directed through the first heating layer in a first general current direction between the first connection side and the second connection side,
wherein the heating system comprises at least one auxiliary bypass layer comprising an electrically conducting element, which bypass layer is in contact with the first heating layer, and that at least a part of the bypass layer is configured to become electrically active when the electric conductivity through the first heating layer is reduced or interrupted in a failure region thereof, and thereby is provided an electric bypass in the auxiliary layer for the electric current passed the failure region.

By electric bypass is meant that the electric current in the heating layer, which current is affected by a reduced or interrupted electric conductivity in the damaged area of the heating layer, is rerouted into the auxiliary bypass layer. When the electric current path is reduced or interrupted by a damage in the first heating layer, the electric current will automatically take the route via the bypass layer in order to pass the damaged region and when it has passed the damaged region, the current will go back into the heating layer that is connected to the power source in order to be able to close the electric circuit. Instead of having a higher concentration of electric current in close vicinity of the damaged area, the bypass layer will lead off the electric current and help distributing the electric current more evenly. Thereby, the creation of hotspots and cold spots will be prevented or at least reduced. The temperature of any hotspots will be less high and it will also help in making any cold spots less cold.

The first heating layer may e.g. comprise a carbon fibre material, in which carbon fibres are the electrically conducting element, or the heating layer may comprise conductive metal threads, e.g. copper or aluminium, forming the electrically conducting element. The heating layer may comprise e.g. a non-crimp fabric.

Preferably, the first and second electric conductor may extend substantially over the width of the first heating layer.

According to another embodiment, the bypass layer may be capable of being electrically connected solely via the first heating layer. This has the advantage that no separate electric connection is needed for the bypass layer.

According to one embodiment, the auxiliary bypass layer may be configured to be electrically conducting in a bypass current direction that is at an angle of between +70° and +110°, or between -70° and -110°, in relation to the first general current direction of the electric current between the first connection side and the second connection side in the first heating layer. The general direction of the electric current in the heating system is usually the same direction as the direction of the blade, from the root to its tip. It has been found to be advantageous to have a bypass current direction that is at an angle of between +70° and +110°, or between -70° and -110°, in relation to the first general current direction in the heating layer, and preferably between +80° and +100°, or between -80° and -100°. The expression between - 70° and -110° can also be expressed as between (+)250° and (+)290°, and between -80° and - 100° can expressed as between (+)260° and (+)280°. Even more preferably the angle should be approximately ±90° to provide an efficient electric bypass.

The bypass layer may comprise a carbon fibre material or comprise metal threads. The bypass layer is preferably bidirectional, in that it will only lead the current in the indicated direction, or its opposite direction. It should not also be able to lead the current in other directions.

According to another embodiment, the first heating layer may comprise at least two electrically conducting sublayers that are interconnected to form a net structure, of which a first sublayer is electrically conductive in a first sub-direction that is at an angle of between +45° and up to, but not including,+90° in relation to the first general current direction of the electric current between the first connection side and the second connection side, and a second sublayer is electrically conductive in a second sub-direction that is at an angle of between -45° and up to, but not including, -90° in relation to the first general current direction of the electric current between the first connection side and the second connection side. Thus one heating layer can comprise several sub-layers of different types in order to build up a suitable heating layer. These sublayers can be said to build up a net structure. It has been found to be an advantage in that it reduces the hotspots in terms of the hotspots having a reduced temperature.

According to another embodiment, the heating system may comprise an optional number of additional heating layers comprising an electrically conducting element and which additional heating layers are in electric contact with the first heating layer. The additional heating layers may have the same configuration as the first heating layer, as disclosed above, but they do not have to be directly connected to a power source since they are in electric contact with the first heating layer. By having several layers there is an option of having many thin layers instead of only a few thicker layers.

According to yet another embodiment, the heating system may comprise an optional number of said auxiliary bypass layer comprising an electrically conducting element, of which each is in electric contact with at least one adjacent heating layer and is configured to provide an electric bypass if the electric conductivity is at least locally reduced or interrupted in said at least one adjacent heating layer.

According to one embodiment, any one heating layer may be electrically conductive in a direction that is at an angle of between ±45° and up to, but not including, ±90° in relation to the first general current direction I_{H} of the electric current between the first connection side and the second connection side. It has actually been found that generally it is more advantageous to have a heating layer that is electrically conductive in a direction that is at an angle of between ±45° and up to, but not including, ±90° in relation to the general current direction of the electric current through the heating layer. This is irrespective of if there is a bypass layer or not. Preferably the referred to angle is between ±60° and ±75°, and in particular an angle of approximately ±60° has been found advantageous.

According to another embodiment, the first heating layer, the at least one auxiliary bypass layer and any additional heating layers may be embedded in the blade body. In this way they are well protected, and efficiency is promoted.

According to one embodiment, the different layers, including the first heating layer, the at least one auxiliary bypass layer, any additional heating layers, are preferably arranged such that they overlap each other to a high degree, and preferably overlap each other completely. This will provide for a more efficient operation of the arrangement since the contact between the different layers will be at its maximum.

Further embodiments and advantages of the invention will also become apparent from the following detailed description of embodiments.

### Brief description of the drawings

The invention will now be described in more detail, with reference being made to the enclosed schematic drawings illustrating different aspects and embodiments of the invention, given as examples only, and in which:
Fig. 1 illustrates schematically a wind turbine rotor blade according to an embodiment of the present invention,
Fig. 2 illustrates schematically the general principle of the present invention in an embodiment,
Fig. 3 is a schematic partial view of a defective region in Fig. 2, in cross section,
Fig. 4 illustrates schematically one embodiment of the present invention,
Fig. 5 is a schematical side view, in cross section, of the embodiment in Fig. 2, and
Fig. 6 is a schematical view of one embodiment of the present invention.

Elements that are the same or represent corresponding or equivalent elements have been given the same reference numbers in the different figures.

### Detailed description

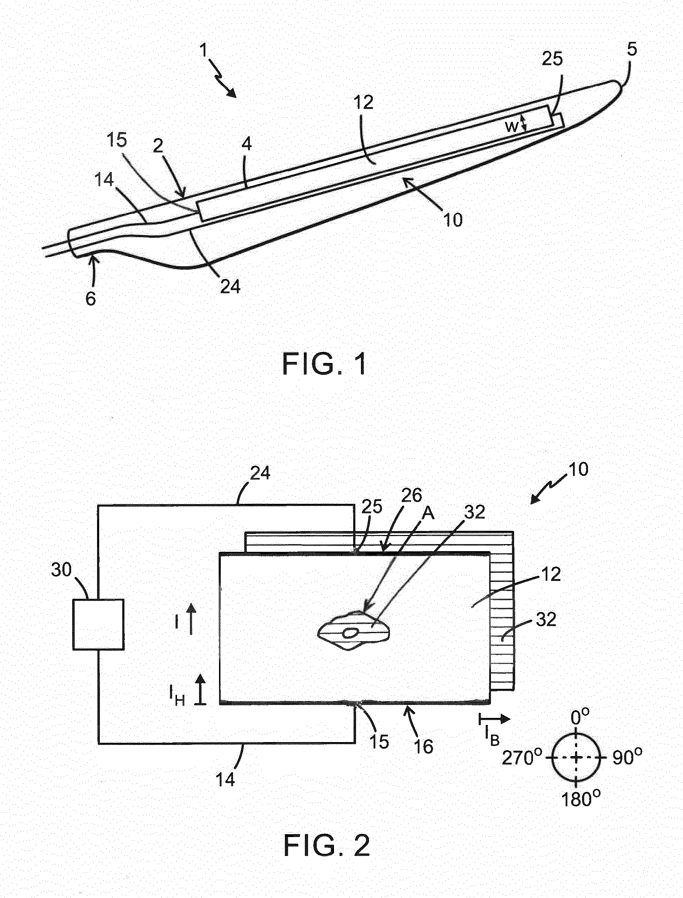

In Fig. 1 is illustrated an embodiment of a wind turbine rotor blade 1 according to the present disclosure. The rotor blade comprises a blade body 2. The blade body 2 comprises a support surface 4 that is in contact with and supports the heating system 10. The blade body can thus be heated by the heating system. The heating system 10 comprises a first heating layer 12 comprising an electrically conducting element, a first electric conductor 14 that is electrically connected to the first heating layer 12 at a first connection side 15, and a second electric conductor 24 that is electrically connected to the first heating layer 12 at a second connection side 25. The electrically conducting element results in the first heating layer being electrically conductive. The first and the second electric conductor 14, 24 are connected to an electric power source 30 such that an electric current I can be directed through the first heating layer 12 between the first side 15 of electric connection and the second side 25 of electric connection. In the illustrated embodiment in Fig. 2, the first side 15 where the first conductor 14 is connected is at a first end 16 of the first heating layer 12, and the second side 25 where the second conductor 24 is connected is at a second end 26 of the first heating layer 12. However, the connection sides or locations for the electric conductors may vary. In the illustrated embodiment the electric conductors 14, 24 are preferably also connected to the first heating layer 12 over the entire width W of the first heating layer. This is advantageous since it will provide a maximum heating area, but it may be varied.

In the schematic illustrated example the second connection side is located opposite the first connection side, however that may vary.

In the embodiment illustrated in Fig. 1, the first heating layer 12 of the heating system 10 has an elongated shape and extends in a longitudinal direction from close to the outer/remote tip end 5 of the blade 1 towards the root end 6. However, the location of the heating system and the heating layer may vary. The geometric shape of the heating layer may also vary.

The heating system 1 comprises an auxiliary bypass layer 32 comprising an electrically conducting element. The bypass layer 32 is electrically connected by contact to the first electric heating layer 12. It is in contact in the way that the bypass layer 32 can be electrically activated via the first heating layer 12 under certain circumstances. The bypass layer 32 is configured to be electrically conducting in a bypass current direction I_{B} that is at an angle of between 70° and 110° (±70° to ±110°), or at essentially a right angle (±90°), in relation to the first general current direction I_{H} of the electric current between the first connection side 15 and the second connection side 25, in the first heating layer 12. Thus the bypass layer 32 is configured to provide an electric bypass if the electric conductivity is at least locally reduced or interrupted in the first heating layer 12. As have been discussed above, there are occasions when the first heating layer 12 may be damaged and when its capability to lead an electric current will be reduced or interrupted locally. It can then no longer fulfill its heating function in the region of the damage and failure. Thus the electric current can be rerouted locally through the bypass layer 32, when it cannot pass through the first heating layer 12, and an electric bypass can be created passed the failure region, by means of the bypass layer. The bypass layer will help distributing the electric current more evenly and thereby reduce the temperature of any hotspots and also help in making any cold spots less cold.

The general idea of the electric bypass can for example be carried out by an embodiment comprising a first heating layer 12 as described above and an auxiliary bypass layer 32. The first heating layer may e.g. comprise a carbon fibre material or conductive metal threads, e.g. copper or aluminium, of which the carbon fibre and the metal threads would constitute electrically conducting elements. Alternatively, the first heating layer may comprise a non-crimp material. The bypass layer may comprise e.g. a carbon fibre material or conductive metal threads, e.g. copper or aluminium, of which the carbon fibre and the metal threads would constitute electrically conducting elements.

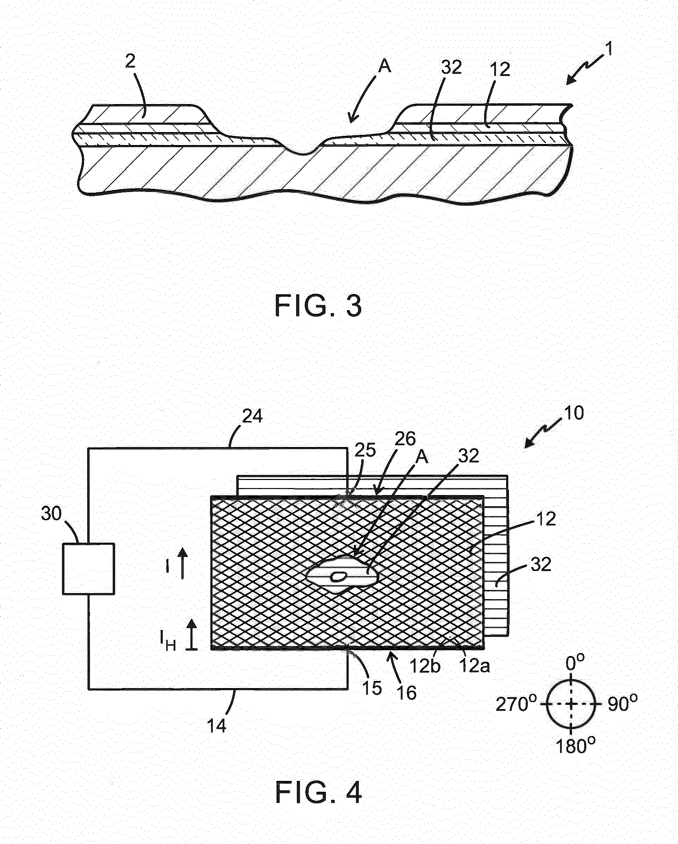

In another embodiment, illustrated in Fig. 4, the first heating layer 12 can comprise two (or more) electrically conductive sublayers 12a, 12b that are interconnected to form a net structure. The first sublayer 12a is electrically conductive in a first sub-direction that is at an angle of between +45° and up to, but not including, +90° in relation to the first general current direction I_{H} of the electric current between the first connection side 15 and the second connection side 25 in the first heating layer 12. The second sublayer 12b is electrically conductive in a second sub-direction that is at an angle of between -45° and up to, but not including, -90° in relation to the first general current direction of the electric current between the first connection side 15 and the second connection side 25. Preferably, the first sub-direction is at approximately +60° and the second sub-direction is at approximately -60°. The bypass layer 32 can then be configured as electrically bidirectional and be located such that it will be electrically conductive in a bypass direction I_{B} that is approximately at a right angle to the general direction I_{H} of the current between the first connection side 15 and the second connection side 25. This is illustrated schematically in Fig. 2 and Fig. 4 by lines indicating the electrically conductive directions of the conductive elements in the auxiliary bypass layer 32. In Fig. 4 the sublayers 12a and 12b are illustrated by their electrically conductive sub-directions.

The general function of the electric heating system is as follows. The heating layer 12 and the bypass layer 32 will be in contact with each other and the first heating layer will be electrically connected via the conductors 14 and 24. The bypass layer will thus also be electrically connected via the first heating layer 12. A region A of the first heating layer 12 has been damaged, as illustrated in Figs. 2-4. The electric conductivity in the region is reduced or even totally interrupted. However, when having an auxiliary bypass layer 32, as described, the current will jump from the first heating layer 12 to the auxiliary layer 32 when it reaches the damaged region A. It will then follow the direction of conductivity I_{B} of the bypass layer 32 at essentially a right angle to the general direction I_{H} of the original current I in the heating layer. When it has reached a location passed the damaged region A, where the first heating layer 12 is again connected to the second conductor 25, the current will jump back to the first heating layer. In this way, an electric bypass will be created, by means of rerouting the electric current to pass through the bypass layer, passed the damaged region A.

Fig. 3 shows schematically a cross section of a part of a rotor blade 1 having a damaged area A. As can be seen, the damage may reach down through the first heating layer 12, and even down through the bypass layer 32, and expose the underlying material of the rotor blade.

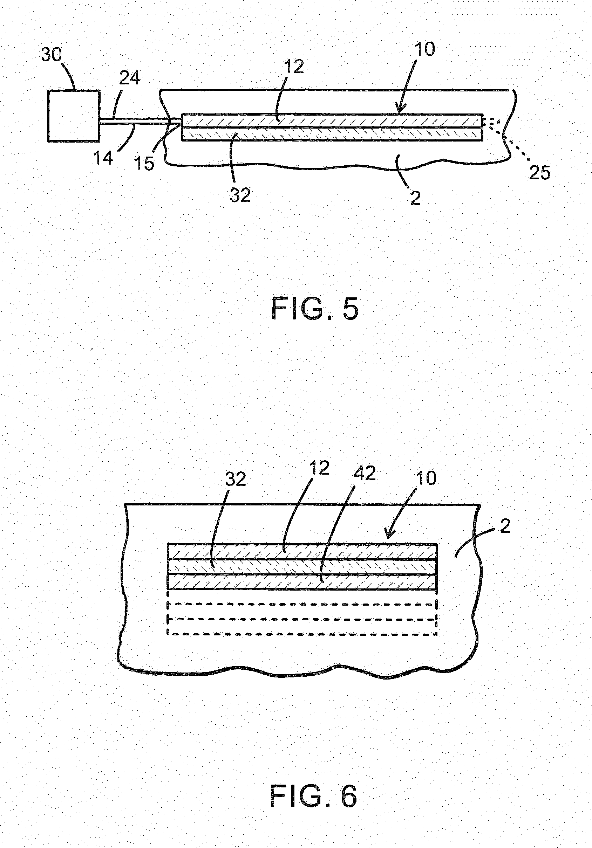

In Fig. 5 is schematically illustrated an embodiment of the general principle shown in Fig. 2, in a side view. The heating system 10 comprises a first heating layer 12 and an auxiliary bypass layer 32. As can be seen here, the first heating layer 12 and the bypass layer 32 are preferably arranged such that they overlap each other to a high degree, and preferably overlap each other completely.

Moreover, different embodiments can be foreseen in which an optional number of additional heating layers 42 can be combined with an optional number of the auxiliary bypass layer 32. The one or more additional heating layers 42 comprise an electrically conducting element and they are in electric contact with the first heating layer 12. It is also possible that such additional heating layers may be electrically connected directly to a power source. The auxiliary bypass layers 32 all have the same basic design as described above.

In embodiments comprising more than one heating layer and more than one auxiliary bypass layer, each of the bypass layers 32 should be in electric contact with at least one adjacent heating layer 12, 42 and thus be configured to provide an electric bypass if the electric conductivity is at least locally reduced or interrupted in said at least one adjacent heating layer 12, 42. In Fig. 6 is schematically illustrated how a number of heating layers and bypass layers may be arranged. One useful configuration is to alternate the layers, e.g. having a first heating layer 12, then a bypass layer 32, followed by an additional heating layer 42. However, any combination of the layers is possible.

The invention shall not be considered limited to the illustrated embodiments, but can be modified and altered in many ways, as realised by a person skilled in the art, without departing from the scope defined in the appended claims.

## Claims

1. A wind turbine rotor blade (1) comprising a blade body (2) and an electric heating system (10), wherein said blade body (2) comprises a support surface (4) that is in contact with the heating system (10),
wherein the heating system (10) comprises
- a first heating layer (12) comprising an electrically conducting element, resulting in the first heating layer being electrically conductive,
- a first electric conductor (14) that is electrically connected to the first heating layer (12) at a first connection side (15) of the first heating layer,
- a second electric conductor (24) that is electrically connected to the first heating layer (12) at a second connection side (25) of the first heating layer, and
- wherein the first and second electric conductor (14, 24) are being connected to an electric power source (30) such that an electric current can be directed through the first heating layer (12) in a first general current direction between the first connection side (15) and the second connection side (25),
**characterized in that** the heating system (10) comprises at least one auxiliary bypass layer (32) comprising an electrically conducting element, which bypass layer is in electric contact with the first heating layer (12), and that at least a part of the bypass layer (32) is configured to reroute the electric current of the first heating layer to pass through the bypass layer when the electric conductivity through the first heating layer (12) is reduced or interrupted in a failure region thereof, and thereby is provided an electric bypass in the bypass layer (32) for the electric current to bypass the failure region.

2. The wind turbine rotor blade according to claim 1, wherein the bypass layer (32) is capable of being electrically connected solely via the first heating layer (12).

3. The wind turbine rotor blade according to any one of the preceding claims, wherein the auxiliary bypass layer (32) is configured to be electrically conducting in a bypass current direction that is at an essentially right angle, preferably at an angle of between +70° and +110°, or between -70° and -110°, in relation to the first general current direction of the electric current between the first connection side (15) and the second connection side (25) in the first heating layer.

4. The wind turbine rotor blade according to any one of the preceding claims, wherein the first heating layer (12) comprises at least two electrically conducting sublayers (12a, 12b) that are interconnected to form a net structure, of which a first sublayer (12a) is electrically conductive in a first sub-direction that is at an angle of between +45° and up to, but not including, +90° in relation to the first general current direction of the electric current between the first connection side (15) and the second connection side (25), and a second sublayer (12b) is electrically conductive in a second sub-direction that is at an angle of between -45° and up to, but not including, -90° in relation to the first general current direction of the electric current between the first connection side (15) and the second connection side (25).

5. The wind turbine rotor blade according to any one of the preceding claims, wherein the heating system comprises an optional number of additional heating layers (42) comprising an electrically conducting element and which additional heating layers are in electric contact with the first heating layer (12).

6. The wind turbine rotor blade according to claim 5, wherein the heating system comprises an optional number of said auxiliary bypass layer (32) comprising an electrically conducting element, of which each is in electric contact with at least one adjacent heating layer (12, 42) and is configured to provide an electric bypass if the electric conductivity is at least locally reduced or interrupted in said at least one adjacent heating layer (12, 42).

7. The wind turbine rotor blade according to any one of the preceding claims, wherein any one heating layer (12, 42) is electrically conductive in a direction that is at an angle of between ±45° and up to, but not including, ±90° in relation to the first general current direction of the electric current between the first connection side (15) and the second connection side (25).

8. The wind turbine rotor blade according to any one of the preceding claims, wherein the first heating layer (12), the at least one auxiliary bypass layer (32) and any additional heating layers (42) are embedded in the blade body.

## Patentansprüche

1. Windturbinenrotorschaufel (1) umfassend einen Schaufelkörper (2) und ein elektrisches Heizsystem (10), wobei der Schaufelkörper (2) eine Stützfläche (4) umfasst, die sich mit dem Heizsystem (10) in Kontakt befindet,
wobei das Heizsystem (10) Folgendes umfasst
- eine erste Heizschicht (12) umfassend ein elektrisch leitendes Element, was zu einer elektrischen Leitfähigkeit der ersten Heizschicht führt,
- einen ersten elektrischen Leiter (14), der an einer ersten Verbindungsseite (15) der ersten Heizschicht mit der ersten Heizschicht (12) elektrisch verbunden ist,
- einen zweiten elektrischen Leiter (24), der an einer zweiten Verbindungsseite (25) der ersten Heizschicht mit der ersten Heizschicht (12) elektrisch verbunden ist,
- wobei der erste und zweite elektrische Leiter (14, 24) mit einer elektrischen Stromquelle (30) verbunden sind, so dass ein elektrischer Strom durch die erste Heizschicht (12) in eine erste allgemeine Stromrichtung zwischen der ersten Verbindungsseite (15) und der zweiten Verbindungsseite (25) geleitet werden kann,
**dadurch gekennzeichnet, dass** das Heizsystem (10) mindestens eine Bypass-Hilfsschicht (32) umfassend ein elektrisch leitendes Element umfasst, welche Bypass-Schicht sich in elektrischem Kontakt mit der ersten Heizschicht (12) befindet, und dass mindestens ein Teil der Bypass-Schicht (32) dazu ausgelegt ist, den elektrischen Strom der ersten Heizschicht zum Fließen durch die Bypass-Schicht umzuleiten, wenn die elektrische Leitfähigkeit durch die erste Heizschicht (12) in einem Fehlerbereich davon reduziert oder abgebrochen ist, und somit ein elektrischer Bypass in der Bypass-Schicht (32) vorgesehen wird, durch welchen der elektrische Strom den Fehlerbereich umgehen kann.

2. Windturbinenrotorschaufel nach Anspruch 1, wobei die Bypass-Schicht (32) dazu im Stande ist, lediglich über die erste Heizschicht (12) elektrisch verbunden zu werden.

3. Windturbinenrotorschaufel nach einem der vorgehenden Ansprüche, wobei die Bypass-Hilfsschicht (32) dazu ausgelegt ist, in einer Bypass-Stromrichtung elektrisch leitend zu sein, die sich in einem in wesentlichen rechten Winkel, vorzugsweise in einem Winkel zwischen +70° und +110°, oder zwischen -70° und -110°, bezogen auf die erste allgemeine Stromrichtung des elektrischen Stroms zwischen der ersten Verbindungsseite (15) und der zweiten Verbindungsseite (25) in der ersten Heizschicht, befindet.

4. Windturbinenrotorschaufel nach einem der vorgehenden Ansprüche, wobei die erste Heizschicht (12) mindestens zwei elektrisch leitende Teilschichten (12a, 12b) umfasst, die zur Bildung einer Netzstruktur miteinander verbunden sind, von denen eine erste Teilschicht (12a) in einer ersten Teilrichtung, die sich in einem Winkel zwischen +45° und bis zu, aber nicht umfassend, +90° relativ zur ersten allgemeinen Stromrichtung des elektrischen Stroms zwischen der ersten Verbindungsseite (15) und der zweiten Verbindungsseite (25) befindet, elektrisch leitend ist, und eine zweite Teilschicht (12b) in einer zweiten Teilrichtung, die sich in einem Winkel zwischen -45° und bis zu, aber nicht umfassend, -90° relativ zur ersten allgemeinen Stromrichtung des elektrischen Stroms zwischen der ersten Verbindungsseite (15) und der zweiten Verbindungsseite (25) befindet, elektrisch leitend ist.

5. Windturbinenrotorschaufel nach einem der vorgehenden Ansprüche, wobei das Heizsystem eine beliebige Anzahl von zusätzlichen Heizschichten (42) umfassend ein elektrisch leitendes Element umfasst, und welche zusätzlichen Heizschichten sich in elektrischem Kontakt mit der ersten Heizschicht (12) befinden.

6. Windturbinenrotorschaufel nach Anspruch 5, wobei das Heizsystem eine beliebige Anzahl der zusätzlichen Bypass-Schichten (32) umfassend ein elektrisch leitendes Element umfasst, von denen jede sich in elektrischem Kontakt mit mindestens einer angrenzenden Heizschicht (12, 42) befindet und dazu ausgelegt ist, einen elektrischen Bypass vorzusehen, wenn die elektrische Leitfähigkeit zumindest bereichsweise in der mindestens einen angrenzenden Heizschicht (12, 42) reduziert oder abgebrochen ist.

7. Windturbinenrotorschaufel nach einem der vorgehenden Ansprüche, wobei jegliche Heizschicht (12, 42) in einer Richtung, die sich in einem Winkel zwischen ±45° und bis zu, aber nicht umfassend, ±90° relativ zur ersten allgemeinen Stromrichtung des elektrischen Stroms zwischen der ersten Verbindungsseite (15) und der zweiten Verbindungsseite (25) befindet, elektrisch leitend ist.

8. Windturbinenrotorschaufel nach einem der vorgehenden Ansprüche, wobei die erste Heizschicht (12), die mindestens eine zusätzliche Bypass-Hilfsschicht (32) und jegliche zusätzlichen Heizschichten (42) in dem Schaufelkörper eingebettet sind.

## Revendications

1. Pale de rotor d'éolienne (1) comprenant un corps de pale (2) et un système de chauffage électrique (10), dans laquelle ledit corps de pale (2) comprend une surface de support (4) qui est en contact avec le système de chauffage (10),
dans lequel le système de chauffage (10) comprend
- une première couche chauffante (12) comprenant un élément électriquement conducteur, ce qui fait que la première couche chauffante est électriquement conductrice,
- un premier conducteur électrique (14) qui est électriquement connecté à la première couche chauffante (12) à un premier côté de connexion (15) de la première couche chauffante,
- un deuxième conducteur électrique (24) qui est connecté électriquement à la première couche chauffante (12) à un deuxième côté de connexion (25) de la première couche chauffante, et
- dans lequel les premier et deuxième conducteurs électriques (14, 24) sont connectés à une source d'énergie électrique (30) si bien qu'un courant électrique peut être dirigé à travers la première couche chauffante (12) dans une première direction générale de courant entre le premier côté de connexion (15) et le deuxième côté de connexion (25),
**caractérisée en ce que** le système de chauffage (10) comprend au moins une couche auxiliaire de dérivation (32) comprenant un élément électriquement conducteur, ladite couche de dérivation étant en contact avec la première couche chauffante (12), et qu'au moins une partie de la couche de dérivation (32) est configurée pour dérouter le courant électrique de la première couche chauffante pour passer à travers a couche de dérivation, lorsque la conductivité électrique à travers la première couche chauffante (12) est réduite ou interrompue dans une région de défaillance de celle-ci, et est ainsi prévue une dérivation électrique dans la couche dérivation (32) pour le courant électrique pour contourner la région de défaillance.

2. Pale de rotor d'éolienne selon la revendication 1, dans laquelle la couche de dérivation (32) est susceptible d'être connectée électriquement uniquement via la première couche chauffante (12).

3. Pale de rotor d'éolienne selon l'une quelconque des revendications précédentes, dans laquelle la couche auxiliaire de dérivation (32) est configurée pour être électriquement conductrice dans une direction de courant de dérivation qui est à un angle essentiellement droit, de préférence à un angle compris entre +70° et +110°, ou entre -70° et -110°, par rapport à la première direction générale de courant du courant électrique entre le premier côté de connexion (15) et le deuxième côté de connexion (25) dans la première couche chauffante.

4. Pale de rotor d'éolienne selon l'une quelconque des revendications précédentes, dans laquelle la première couche chauffante (12) comprend au moins deux sous-couches électriquement conductrices (12a, 12b) qui sont interconnectées pour former une structure en filet, dont une première sous-couche (12a) est électriquement conductrice dans une première sous-direction qui est à un angle compris entre +45° et jusqu'à, mais non compris, +90° par rapport à la première direction générale de courant électrique du courant électrique entre le premier côté de connexion (15) et le deuxième côté de connexion (25), et une deuxième sous-couche (12b) est électriquement conductrice dans une deuxième sous-direction qui est à un angle compris entre -45° et jusqu'à, mais non compris, -90° par rapport à la première direction générale de courant électrique du courant électrique entre le premier côté de connexion (15) et le deuxième côté de connexion (25).

5. Pale de rotor d'éolienne selon l'une quelconque des revendications précédentes, dans laquelle le système de chauffage comprend un nombre facultatif de couches chauffantes supplémentaires (42) comprenant un élément électriquement conducteur et lesdites couches chauffantes supplémentaires sont en contact électrique avec la première couche chauffante (12).

6. Pale de rotor d'éolienne selon la revendication 5, dans laquelle le système de chauffage comprend un nombre facultatif de ladite couche auxiliaire de dérivation (32) comprenant un élément électriquement conducteur, dont chacun est en contact électrique avec au moins une couche chauffante adjacente (12, 42) et est configuré pour fournir une dérivation électrique si la conductivité électrique est au moins localement réduite ou interrompue dans ladite au moins une couche de chauffage adjacente (12, 42).

7. Pale de rotor d'éolienne selon l'une quelconque des revendications précédentes, dans laquelle toute couche chauffante (12, 42) est électriquement conductrice dans une direction qui est à un angle compris entre ±45° et jusqu'à, mais non compris, ±90° par rapport à la première direction générale de courant du courant électrique entre le premier côté de connexion (15) et le deuxième côté de connexion (25).

8. Pale de rotor d'éolienne selon l'une quelconque des revendications précédentes, dans laquelle la première couche chauffante (12), l'au moins une couche auxiliaire de dérivation (32) et toute couche chauffante supplémentaire (42) sont noyées dans le corps de pale.
